# EUROPÄISCHE PATENTSCHRIFT

(11) **EP 0 781 783 B1**
(45) Veröffentlichungstag und Bekanntmachung des Hinweises auf die Patenterteilung: **02.06.1999**
(21) Anmeldenummer: 96120745.3
(22) Anmeldetag: 23.12.1996
(51) Int. Cl.: C08F 4/629, C08F 10/00

(54) **Metallocenkatalysatorsysteme mit sterisch gehinderten Lewis-Basen**
Metallocene catalyst systems with sterically hindered Lewis-base
Systèmes catalytiques à base de métallocène comportant une base de Lewis présentant un encombrement stérique

(30) Priorität: 27.12.1995 DE 19548784
(43) Veröffentlichungstag der Anmeldung: 02.07.1997
(73) Patentinhaber: BASF AKTIENGESELLSCHAFT, 67056 Ludwigshafen (DE)
(72) Erfinder: Rösch, Joachim, Dr., 67069 Ludwigshafen (DE)

(56) Entgegenhaltungen:
- EP-A- 0 488 533
- EP-A- 0 648 786
- WO-A-95/10546
- FR-A- 2 317 312
- PATENT ABSTRACTS OF JAPAN vol. 18, no. 443 (C-1239), 18.August 1994 & JP 06 136053 A (MITSUI), 17.Mai 1994, & DATABASE WPI Derwent Publications Ltd., London, GB; AN 94-197147
- POLYMER BULLETIN, Bd. 34, Nr. 5/6, Mai 1995, Seiten 555-561, XP000508935 COSTA MARCO: "The role of hindered Lewis Bases on the catalyst performance of TiCl3 for propylene polymerization"

## Beschreibung

Die vorliegende Erfindung betrifft Katalysatorsysteme, die für die Polymerisation von olefinisch ungesättigten Verbindungen geeignet sind, enthaltend als aktive Bestandteile
A) einen Metallocenkomplex der Metalle der vierten, fünften oder sechsten Nebengruppe des Periodensystems der Elemente,
B) eine metalloceniumionenbildende Verbindung und
C) eine sterisch gehinderte Lewis-Base,
sowie ein Verfahren zur Herstellung von Polymeren durch Verknüpfung von mindestens zwei olefinisch ungesättigten Monomeren bei einer Temperatur im Bereich von 0 bis 450°C und einem Druck im Bereich von 0, 1 bis 500 000 kPa in Gegenwart eines Katalysatorsystems.

Metallocenkatalysatorsysteme, also Katalysatorsysteme welche Metallkomplexe mit mindestens einer vom Cyclopentadienylliganden abgeleiteten Struktureinheit enthalten, werden in zunehmendem Maße für die Polymerisation oder Oligomerisation von olefinisch ungesättigten Monomeren verwendet.

Verbesserungsbedürftig ist bei diesen Katalysatorsystemen deren Produktivität, ausgedrückt in Menge produziertes Polymer pro Menge eingesetztem Katalysator, sowie die Steigerung des Molekulargewichts der mit den Metallocenkatalysatoren erhältlichen Polymeren.

Der Einfachheit halber wird im folgenden unter Polymerisation die Verknüpfung von mindestens zwei Monomereinheiten und unter Polymere Dimere, Oligomere, Wachse und Hochpolymere verstanden.

DE-OS 26 30 585 beschreibt die Verwendung von sterisch gehinderten Verbindungen R₂Al(OR'') und RAl(OR'')₂ als Cokatalysatoren in Ziegler-Katalysatorsystemen. Diese Verbindungen zeichnen sich aber nicht durch eine aktivitätssteigernde Wirkung bei der Ziegler-Olefinpolyerisation aus.

JP-A-613605 beschreibt ein Katalysatorsystem aus Metallocen, Alumoxan und 2,6-Di-tert.-butyl-p-cresol. WO-A 95/10546 und EP-A 648786 beschreiben Katalysatoren aus Metallocen, Borat und 2-Ethyl-1-hexanol bzw. Diisobutylphthalat oder Diphenyldimethoxysilan.

Der vorliegenden Erfindung lag daher die Aufgabe zugrunde Metallocenkatalysatorsysteme zur Verfügung zu stellen, die einfach herstellbar sind, hohe Produktivität bei der Polymerisation von olefinisch ungesättigten Monomeren haben und zudem Polymere mit erhöhtem Molekulargewicht liefern.

Demgemäß wurden Katalysatorsysteme, die für die Polymerisation von olefinisch ungesättigten Verbindungen geeignet sind, enthaltend als aktive Bestandteile
A) einen Metallocenkomplex der Metalle der vierten, fünften oder sechsten Nebengruppe des Periodensystems der Elemente,
B) eine metalloceniumionenbildende Verbindung und
C) eine sterisch gehinderte Aryloxyaluminium-Verbindung
und ein Verfahren zur Herstellung von Polymeren durch Verknüpfung von mindestens zwei olefinisch ungesättigten Monomeren bei einer Temperatur im Bereich von 0 bis 450 °C und einem Druck im Bereich von 0,1 bis 500 000 kPa in Gegenwart eines Katalysatorsystems, wobei man als Katalysatorsystem ein solches verwendet, welches als aktive Bestandteile
A) einen Metallocenkomplex der Metalle der vierten, fünften oder sechsten Nebengruppe des Periodensystems der Elemente,
B) eine metalloceniumionenbildende Verbindung und
C) eine sterisch gehinderte Aryloxyaluminiumverbindung enthält, gefunden.

Als Komponente A) kommen ein Metallocenkomplex oder auch mehrere Metallocenkomplexe in Frage.

Unter Metallocenkatalysatoren sind hier Stoffe zu verstehen, die im allgemeinen durch die Kombination einer Übergangsmetallverbindung oder mehrerer Übergangsmetallverbindungen, vorzugsweise des Titans, Zirkoniums oder Hafniums, die mindestens einen Liganden enthält, der im weitesten Sinne ein Derivat des Cyclopentadienylliganden ist, mit einem Aktivator, auch Cokatalysator oder metalloceniumionenbildende Verbindung genannt, entsteht und im allgemeinen gegenüber den beschriebenen Monomeren polymerisationsaktiv sind. Derartige Katalysatoren sind beispielsweise in EP-A 0 545 303, EP-A 0 576 970 und EP-A 0 582 194 beschrieben. Die erfindungsgemäßen Katalysatorsysteme enthalten als aktive Bestandteile im allgemeinen
A) einen Metallocenkomplex oder mehrere Metallocenkomplexe der allgemeinen Formel (I) 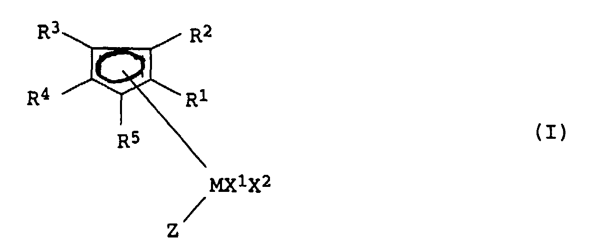 in der die Substituenten und Indizes folgende Bedeutung haben:
   - M: Titan, Zirkonium, Hafnium, Vanadium, Niob, Tantal, Chrom, Molybdän oder Wolfram
   - X¹,X²: Fluor, Chlor, Brom, Iod, Wasserstoff, C₁- bis C₁₀-Alkyl, C₆- bis C₁₅-Aryl, -OR⁶ oder -NR⁶R⁷
   - wobei R⁶,R⁷: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
   - R¹ bis R⁵: Wasserstoff, C₁- bis C₂₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R⁸)₃ mit
   - R⁸: C₁- bis C₁₀-Alkyl, C₆- bis C₁₅-Aryl oder C₃- bis Cio-Cycloalkyl,
   - Z: für X¹, X² oder 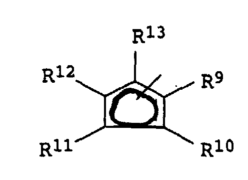 steht,
   wobei die Reste
   - R⁹ bis R¹³: Wasserstoff, C₁- bis C₂₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende cyclische Gruppen stehen können, oder Si(R¹⁴)₃ mit
   - R¹⁴: C₁- bis C₁₀-Alkyl, C₆- bis C₁₅-Aryl oder C₃- bis C₁₀-Cycloalkyl,
   oder wobei die Reste
   - R⁴ und Z: gemeinsam eine Gruppierung -[Y(R¹⁵)(R¹⁶)]ₙ-E- bilden, in der
   - Y: gleich oder verschieden sein kann und für Silicium, Germanium, Zinn oder Kohlenstoff steht,
   - R¹⁵,R¹⁶: für Wasserstoff, C₁- bis C₁₀-Alkyl, C₃- bis C₁₀-Cycloalkyl oder C₆- bis C₁₅-Aryl
   - n: für die Zahlen 1, 2, 3 oder 4,
   - E: für 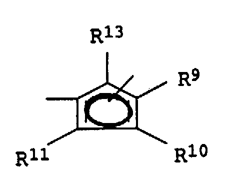 oder A steht, wobei A ―O―, ―S―, 〉NR¹⁷ oder 〉PR¹⁷ bedeutet,
   - mit R¹⁷: C₁- bis C₁₀-Alkyl, C₆- bis C₁₅-Aryl, C₃- bis C₁₀-Cycloalkyl, Alkylaryl oder Si(R¹⁸)₃
   - mit R¹⁸: C₁- bis C₁₀-Alkyl, C₆- bis C₁₅-Aryl, C₃- bis C₁₀-Cycloalkyl oder Alkylaryl
   und
B) eine metalloceniumionenbildende Verbindung.
Gut geeignete Übergangsmetallverbindungen (I) sind 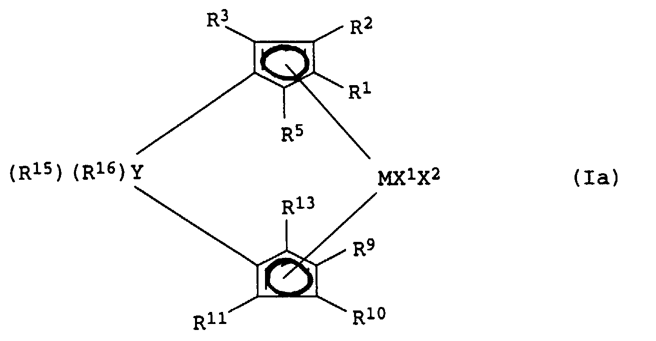 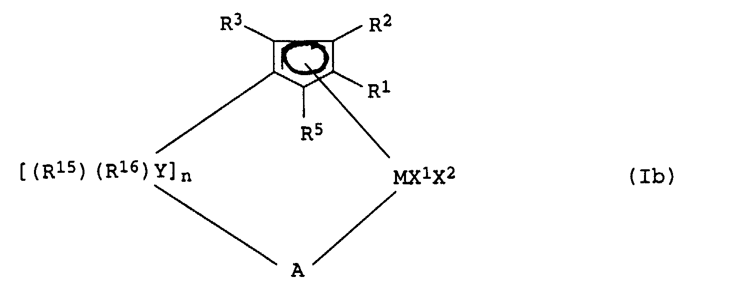 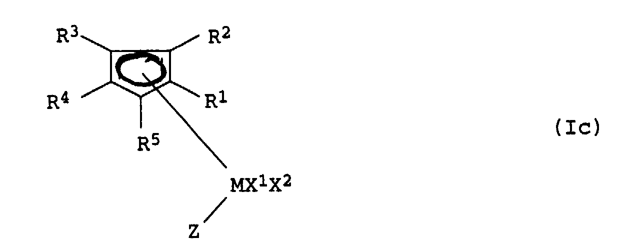 worin Z für X¹, X² oder für 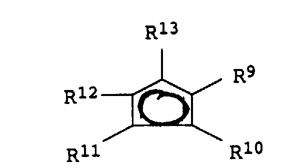 steht, wobei R⁴ und Z keine Gruppierung 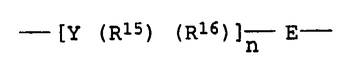 bilden. Unter der Bezeichnung Metallocenkomplex oder Metallocen werden also nicht nur die Bis(η-cyclopentadienyl)-Metall-Komplexe und deren Derivate verstanden.

Die Reste X¹, X² können gleich oder verschieden sein, bevorzugt sind sie gleich.

Von den Verbindungen der Formel (Ia) sind diejenigen besonders geeignet, in denen
- R¹ und R⁹: gleich sind und für Wasserstoff oder C₁- bis C₁₀-Alkylgruppen stehen,
- R⁵ und R¹³: gleich sind und für Wasserstoff, eine Methyl-, Ethyl-, iso-Propyl- oder tert.-Butylgruppe stehen,
- R², R³, R¹⁰: und R¹¹ die Bedeutung R³ und R¹¹ C₁- bis C₄-Alkyl, R² und R¹⁰ Wasserstoff haben oder zwei benachbarte Reste R² und R³ sowie R¹⁰ und R¹¹ gemeinsam für 4 bis 12 C-Atome aufweisende cyclische Gruppen stehen,
- R¹⁵,R¹⁶: für C₁- bis C₈-Alkyl,
- M: für Titan, Zirkonium oder Hafnium,
- Y: für Silicium, Germanium, Zinn oder Kohlenstoff und
- X¹,X²: für Chlor oder C₁- bis C₄-Alkyl stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid
Dimethylsilandiylbis(-3-tert.butyl-5-ethylcyclopentadienyl)-zirkoniumdichlorid,
Dimethylsilandiylbis(3-tert.butyl-5-methylcyclopentadienyl-dimethylzirkonium,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-methylindenyl)-zirkoniumdimethyl,
Dimethylsilandiylbis[3,3'-(-2-methylbenzindenyl)]-zirkoniumdichlorid,
Dimethylsilandiylbis(-2-methylindenyl)-hafniumdichlorid,
Dimethylsilandiylbis[3,3'-(2-methylbenzindenyl)]hafniumdichlorid,
Dimethylsilandiylbis[3,3'-(2-methylbenzindenyl)]zirkoniumdimethyl.

Bei den Verbindungen der allgemeinen Formel (Ib) sind als besonders geeignet diejenigen zu nennen, in denen
- M: für Titan oder Zirkonium,
- X¹,X²: für Chlor oder C₁- bis C₁₀-Alkyl stehen,
- Y: für Silicium oder Kohlenstoff steht, wenn n = 1 ist oder für Kohlenstoff, wenn n = 2 ist
- _{R}15_{, R}16: für C₁- bis C₈-Alkyl, C₅- und C₆-Cycloalkyl oder C₆- bis C₁₀-Aryl,
- A: für -O- , -S- , 〉NR¹⁷
und
- R¹ bis R³ und R⁵: für Wasserstoff, C₁- bis C₁₀-Alkyl, C₃- bis C₁₀-Cycloalkyl, C₆- bis C₁₅-Aryl oder Si(R⁸)₃ stehen, oder wobei zwei benachbarte Reste für 4 bis 12 C-Atome aufweisende cyclische Gruppen stehen.

Von den Verbindungen der Formel (Ic) sind diejenigen besonders gut geeignet, in denen Z für X¹ oder X² steht und X¹ und X² gleich sind. Vorzugsweise ist dann X¹, X² Halogen oder C₁- bis C₄-Alkyl und R¹ bis R⁵ in (Ic) steht dann für C₁-C₄-Alkyl.

Wenn Z in (Ic) für 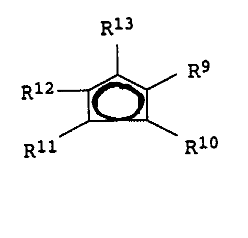 steht, bedeutet X¹, X² vorzugsweise Halogen oder C₁- bis C₄-Alkyl und R¹ bis R⁵ sowie R⁹ bis R¹³ stehen vorzugsweise für Wasserstoff, C₁-bis C₂₀-Alkyl, wie Methyl, Ethyl, n-Propyl, tert.-Butyl, n-Hexyl, n-Octyl, insbesondere Octadecyl.

Beispiele für besonders geeignete Verbindungen (Ic) sind Pentamethylcyclopentadienyltitantrimethyl, Pentamethylcyclopentadienyltitantrichlorid und Bis (octadecylcyclogentadienyl) zirkoniumdichlorid, Biscyclopentadienylzirkoniumdichlorid, Bis(pentamethylcyclopentadienyl)zirkoniumdichlorid, Bis (methylcyclopentadienyl)zirkoniumdichlorid.

Die Synthese derartiger Übergangsmetallverbindungen (I) kann nach an sich bekannten Methoden erfolgen, wobei die Umsetzung der entsprechend substituierten Cycloalkenylanionen mit Halogeniden der Übergangsmetalle, beispielsweise Titan, Zirkonium, Hafnium, Vanadium, Niob, Tantal, Chrom, Molybdän oder Wolfram bevorzugt ist. Beispiele für entsprechende Herstellungsverfahren sind unter anderem in Journal of Organometallic Chemistry, Bd. 369 (1989), Seiten 359 bis 370 beschrieben.

Metalloceniumionenbildende Verbindungen B) sind dem Fachmann bekannt und beispielsweise in WO 95/14044 beschrieben.

Gut geeignet sind beispielsweise offenkettige oder cyclische Alumoxanverbindungen der allgemeinen Formel (II) oder (III) 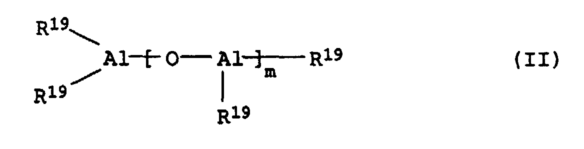 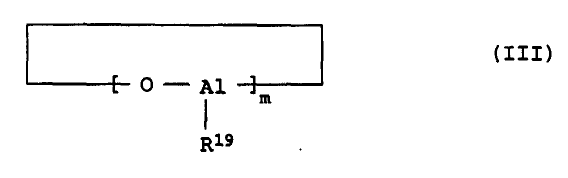 wobei
- R¹⁹: eine C₁- bis C₄-Alkylgruppe bedeutet, bevorzugt Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 10⁴:1, liegt.

Als metalloceniumionenbildende Verbindung B) können auch Koordinationskomplexverbindungen, aus der Gruppe der starken, neutralen Lewissäuren eingesetzt werden.

Als starke neutrale Lewissäuren sind Verbindungen der allgemeinen Formel IV

M²X³X⁴X⁵ (IV)

bevorzugt, in der
- M²: ein Element der III. Hauptgruppe des Periodensystems bedeutet, insbesondere B, Al oder Ga, vorzugsweise B,
- X³,X⁴ und X⁵: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, wie Fluoraryle, vorzugsweise für Pentafluorphenyl.

Besonders bevorzugt sind Verbindungen der allgemeinen Formel (IV), in der X³, X⁴ und X⁵ gleich sind, vorzugsweise Tris(pentafluorphenyl)boran. Diese Verbindungen sowie Verfahren zu ihrer Herstellung sind an sich bekannt und beispielsweise in der WO 93/3067 beschrieben.

Es hat sich als besonders geeignet erwiesen, wenn das molare Verhältnis von Bor aus der metalloceniumionenbildenden Verbindung zu Übergangsmetall aus dem Metallocenkomplex im Bereich von 0,1:1 bis 10:1 liegt, insbesondere im Bereich von 1:1 bis 5:1.

Die metalloceniumionenbildende Verbindungen B) werden üblicherweise für sich alleine, im Gemisch miteinander oder im Gemisch mit metallorganischen Verbindungen der ersten bis dritten Hauptgruppe des Periodensystems der Elemente, beispielsweise n-Butyllithium, Di-n-butylmagnesium, Butyloctylmagnesium, Trimethylaluminium, Triethylaluminium, Triisobutylaluminium, Diisobutylaluminiumhydrid verwendet, wobei das Mischungsverhältnis der Komponenten zueinander im allgemeinen nicht kritisch ist.

Vorzugsweise verwendet man C₁- bis C₁₀-Alkylaluminoxane als metalloceniumionenbildende Verbindung B) und insbesondere Methylaluminoxan.

Unter sterisch gehinderten Aryloxyaluminium verbindungen C) sind aluminium organische Verbindungen zu verstehen, welche mindestens ein Atom mit mindestens einem freien Elektronenpaar enthalten, wobei dieses Atom oder diese Atome mindestens eine direkt benachbarte Gruppe hat bzw. haben, die es weithin abschirmen und welche sterische Hinderung hervorrufen können. Im allgemeinen versteht man unter diesen Gruppen kohlenstoff- oder siliziumorganische Reste mit hohem Raumbedarf (sperrige Reste). Die Anzahl der Kohlenstoffatome die in derartigen Resten enthalten sind, liegt üblicherweise nicht unter drei.

Geeignete nicht-aromatische, sperrige Reste sind solche kohlenstoff- oder siliziumorganischen Reste, die in α-Stellung oder höherer Stellung verzweigt sind. Beispiele für derartige Reste sind verzweigte C₃- bis C₂₀-aliphatische, C₉- bis C₂₀-araliphatische Reste und C₃- bis C₁₀-cycloaliphatische Reste, wie iso-Propyl, tert.-Butyl, iso-Butyl, neo-Pentyl, 2-Methyl-2-phenylpropyl (Neo-phyl), Cyclohexyl, 1-Methylcyclohexyl, Bicyclo[2.2.1]hept-2-yl (2-Norbornyl), Bicyclo[2.2.1]hept-1-yl(1-Norbornyl), Adamantyl. Weiterhin kommen als solche Reste siliziumorganische Reste mit drei bis dreißig Kohlenstoffatomen in Frage, beispielsweise Trimethylsilyl, Triethylsilyl, Triphenylsilyl, tert.-Butyldimethylsily, Tritolylsilyl oder Bis(trimethylsilyl)methyl.

Geeignete aromatische, sperrige Gruppen sind in der Regel C₆- bis C₂₀-Arylreste, wie Phenyl, 1- oder 2-Naphthtyl oder vorzugsweise C₁- bis C₁₀-alkyl- oder C₃- bis C₁₀-cycloalkylsubstituierte aromatische Reste wie 2,6-Dimethylphenyl, 2,6-Di-tert.-Butylphenyl, Mesityl.

Als Atom oder Atome mit freiem Elektronenpaar oder freien Elektronenpaaren kommen Sauerstoff, vorzugsweise als Aluminiumoxyverbindungen in Frage.

Sehr gut geeignete Komponenten C) sind solche Aryloxyaluminiumverbindungen der allgemeinen Formel (V) in welcher die Substituenten und Indizes die folgende Bedeutung haben.

Ar-O-X (V)

Ar=

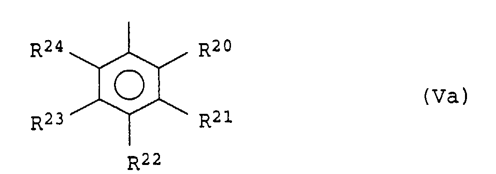

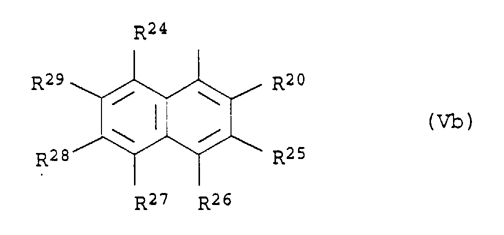

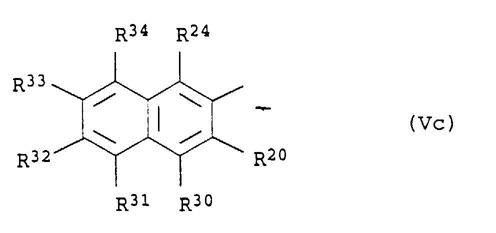

R²⁰, R²⁴ bedeuten dann verzweigte C₃- bis C₂₀-aliphatische, verzweigte C₉- bis C₂₀-araliphatische Reste, C₃- bis C₁₀-cycloaliphatische Reste, siliziumorganische Reste -SiR'₃ mit drei bis dreißig Kohlenstoffatomen, C₆- bis C₂₀-Arylreste, die auch einfach oder mehrfach C₁- bis C₁₀-alkyl- oder cycloalkylsubstituiert sein können. Beispiele für derartige Reste sind iso-Propyl, tert.-Butyl, iso-Butyl, neo-Pentyl, 2-Methyl-2-phenylpropyl (Neophyl), Cyclohexyl, 1-Methylcyclohexyl, Bicyclo[2.2.l]hept-2-yl (2-Norbornyl), Bicyclo[2.2.l]hept-l-yl (1-Norbornyl), Adamantyl, Trimethylsilyl, Triethylsilyl, Triphenylsilyl, tert.-Butyldimethylsily, Tritolylsilyl oder Bis(trimethylsilyl)methyl, Phenyl, 2,6-Dimethylphenyl, 2,6-Di-tert.-Butylphenyl, Mesityl, 2,6-Di-tert.-Butyl-4-Methylphenyl.

R²¹, R²², R²³, R²⁵, R²⁶, R²⁷, R²⁸, R²⁹, R³⁰, R³¹, R³², R³³, R³⁴ bedeuten Wasserstoff, Halogen, vorzugsweise Chlor, C₁- bis C₁₀-Alkyl, wie Methyl, Ethyl, n-Propyl, n-Butyl, tert.-Butyl, n-Hexyl, vorzugsweise Methyl und weiterhin können die Reste C₆- bis C₁₀-Aryl, wie Phenyl, Tolyl bedeuten.

X in (V) bedeutet -AlR³⁵R³⁶, mit R³⁵, R³⁶ C₁- bis C₁₀-Alkyl, wie Methyl, Ethyl, n-Propyl, iso-Propyl, n-Butyl, sec.-Butyl, tert.-Butyl und vorzugsweise Methyl, Ethyl, iso-Butyl. Weiterhin bedeutet R³⁵, R³⁶ C₆- bis C₁₀-Aryl, vorzugsweise Phenyl, Mesityl, 2,6-Di-tert.-butyl-4-methylphenyl. Einer der Reste R³⁵, R³⁶ kann auch ein Ar-O-Rest sein, wobei Ar die für (Va), (Vb) und (Vc) spezifizierte Bedeutung hat.

Die Aryloxyaluminiumverbindungen Ar-O-AlR³⁵R³⁶ sind im allgemeinen durch Umsetzung der jeweiligen Organoaluminiumverbindunge AlR³⁶R³⁶R³⁷, wobei R³⁷ Wasserstoff oder die für R³⁵, R³⁶ spezifizierte Bedeutung hat, mit der entsprechenden Hydroxyarylverbindung Ar-OH im allgemeinen im molaren Verhältnis Al:Ar-OH 1:1 bis 1:2 erhältlich, wie exemplarisch in Organometallics (1988), Volume 7, Seiten 409 bis 416 beschrieben.

Für die Herstellung von bevorzugten Aryloxyaluminiumverbindungen (ArO)₂AlR^{35,} (ArO)AlR³⁵R³⁶, worin R³⁵, R³⁶ nicht ArO- bedeutet, sind die folgenden Arylhydroxyverbindungen geeignet, die auch als solche bevorzugte Lewis-Basen C) darstellen. Bevorzugte Phenolderivate (V) sind Bis-2,6-trimethylsilyl-4-methylphenol, 2,4,6-Tritert.-butylphenol, insbesondere 2,6-Ditert.-butyl-4-methylphenol (BHT).

Bevorzugte 1-Naphtholderivate (V) sind 2,4,8-Tris(trimethylsilyl)naphtol, 2,4,8-Tritert.-butylnaphtol, insbesondere 2,8-Ditert.-butyl-4-methylnaphtol.

Bevorzugte 2-Naphtholderivate (V) sind 1,3-Ditert.-butyl-2-naphtol, 1,3-Trimethylsilyl-2-naphtol, insbesondere 1,3-Ditert.-butyl-2-naphtol.

Das molare Verhältnis von Lewis-Base C), insbesondere den Verbindungen (V), zu der Übergangsmetallkomponente A) liegt im allgemeinen im Bereich von 0,0001:1 bis 10000:1, vorzugsweise im Bereich von 0,0001:1 bis 2000:1.

Das molare Verhältnis Verbindung (V), zu der metalloceniumionenbildenden Verbindung B) liegt üblicherweise im Bereich von 1:1000 bis 10000:1, vorzugsweise im Bereich von 1:10 bis 1000:1.

Die Komponenten A), B) und C) des Katalysatorsystems können, vorzugsweise gelöst in inerten Kohlenwasserstoffen, wie Ethylbenzol, Toluol, Heptan, Hexan, in beliebiger Reihenfolge gemischt werden und dann mit dem oder den Monomeren in Berührung gebracht werden. Besonders gute Ergebnisse erhält man aber, wenn die Metallocenkomponente A) mit der metalloceniumionenbildenden Komponente B) vorgemischt und zu dem oder den Monomeren gegeben wird und dann die Verbindungen (V) und insbesondere die Aryloxyaluminiumverbindungen (Va) zu dem Gemisch dosiert wird.

Die erfindungsgemäßen Katalysatorsysteme können auch auf einem Trägermaterial eingesetzt werden.

Als Trägermaterialien werden vorzugsweise feinteilige Träger eingesetzt, die bevorzugt einen Teilchendurchmesser im Bereich von 1 bis 300 µm aufweisen, insbesondere von 30 bis 70 µm. Geeignete Trägermaterialien sind beispielsweise Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace. Weitere Träger sind u.a. feinteilige Polyolefine, beispielsweise feinteiliges Polypropylen.

Mit Hilfe der erfindungsgemäßen Katalysatorsysteme lassen sich Oligomere, Wachse und Hochpolymere aus olefinisch ungesättigten Kohlenwasserstoffen herstellen.

Geeignete olefinisch ungesättigte Kohlenwasserstoffe sind beispielsweise Ethylen, C₃- bis C₁₂-Alk-1-ene, wie Propen, 1-Buten, iso-Buten, 1-Penten, 4-Methyl-1-penten, 1-Hexen, 1-Hepten, 1-Octen, 1-Nonen, 1-Decen, 1-Undecen, 1-Dodecen, ferner Styrol, α-Methylstyrol, Cycloolefine, wie Cyclopenten, Norbornen oder aber Diene, wie 1,3-Butadien, 1,4-Hexadien, 1,5-Hexadien oder Norbornadien. Vorzugsweise verwendet man Ethylen, Propen, 1-Hexen, 1-Octen, 1-Decen oder Styrol als olefinisch ungesättigte Kohlenwasserstoffmonomere.

Im allgemeinen sind Oligomere vorteilhaft mit Katalysatorsystemen erhältlich, welche unverbrückte Metallocenkomplexe der Formel (Ic) enthalten, für die Hochpolymeren eignen sich besonders gut die Katalysatorsysteme der allgemeinen Formeln (Ia) oder (Ib).

Die Oligomere, vorzugsweise Homo- oder Cooligomere aus Ethylen, Propen, 1-Buten, oder 1-Decen haben im allgemeinen eine mittlere Molmasse Mw bestimmt mit der Methode der Gelpermeationschromatographie in Tetrahydrofuran bei 30°C und gegen Polystyrolstandard im Bereich von 100 bis 10000, vorzugsweise im Bereich von 200 bis 5000.

Die Hochpolymeren, vorzugsweise Homo- oder Copolymere aus Ethylen, Propen, 1-Buten, 1-Hexen, 1-Octen oder Styrol, haben üblicherweise eine mittlere Molmasse Mw, bestimmt mit der Methode der Gelpermeationschromatographie (GPC) in 1,2,4-Trichlorbenzol bei 135 °C gegen Polyethylen- oder Polypropylenstandard, im Bereich von 10000 bis 5·10⁶, vorzugsweise im Bereich von 30000 bis 2·10⁶.

Der Zusatz der Komponente C) führt in der Regel zu einer Erhöhung der mittleren Molmasse Mw zum um 1 bis 20 %, im Vergleich analogen Katalysatorsystemen ohne Komponente C).

Die Molekulargewichtsverteilung Mw/Mn der Polymeren aus olefinisch ungesättigten Kohlenwasserstoffen, gemessen mit der GPC-Methode wie oben beschrieben, liegt üblicherweise im Bereich von 1,4 bis 5,0, vorzugsweise im Bereich von 1,8 bis 3,2.

Die Herstellung der Polymeren aus den olefinisch ungesättigten Kohlenwassertsoffen kann in den üblichen Reaktoren entweder kontinuierlich oder vorzugsweise diskontinuierlich erfolgen.

Geeignete Reaktoren sind unter anderem kontinuierlich betriebene Rührkessel, wobei man gegebenenfalls auch eine Reihe von mehreren hintereinandergeschalteten Rührkesseln verwenden kann. Die Polymerisationsreaktionen lassen sich in der Gasphase in Suspension, in flüssigen und in überkritischen Monomeren oder in inerten Lösungsmitteln durchführen.

Die Polymerisationsbedingungen sind an sich unkritisch. Drücke von 0,1 bis 500000 kPa, vorzugsweise 100 bis 250 000 und insbesondere 100 bis 100 000 kPa, Temperaturen von 0 bis 450°C, vorzugsweise 20 bis 250°C und insbesondere 50 bis 100°C haben sich als geeignet erwiesen.

Das mittlere Molekulargewicht der Polymeren kann mit den in der Polymerisationstechnik üblichen Methoden gesteuert werden, beispielsweise durch Zufuhr von Molekulargewichtsreglern, wie Wasserstoff, welche im allgemeinen zu einer Reduzierung des Molekulargewichts des Polymeren führt oder durch Variation der Polymerisationstemperatur, wobei hohe Polymerisationstemperaturen üblicherweise zu reduzierten Molekulargewichten führen.

In einem bevorzugten Verfahren dosiert man eine Mischung aus dem Metallocenkomplexe A) und Methylaluminoxan als Komponente B) in Toluol zu dem Monomeren. Kurz danach gibt man die Komponente C) zu dem Polymerisationsgemisch.

### Beispiele

### Versuche 1 ergleichs-, 2 ergleichs-, 5 ergleichs-, 6 ergleichs-:Propenpolymerisationen bei 2000 kPa

In einem Stahlautoklaven mit einem Nutzvolumen von 1 l wurde Propen vorgelegt und auf 50 °C erwärmt, wobei sich ein Druck von 2000 kPa im Reaktor einstellte. Dann wurde eine Lösung der Metallocenverbindung A) in 32 ml (Versuch Nr. 5:16 ml, Versuch Nr.6:4 ml) 1,7 M toluolischer Methylaluminoxanlösung als Komponente B) zugegeben (Al : Übergangsmetall = 500 : 1). Fünf Minuten später wurde die Lewis-Base C) gelöst in Ethylbenzol zugegeben. Die Polymerisationsreaktion wurde so lange durchgeführt, bis der Reaktordruck gerade unter 300 kPa abgesunken war (25 bis ca. 90 Minuten, je nach Katalysatorsystem). Überschüssiges Propylen wurde dann abgelassen und das Reaktionsprodukt isoliert und analysiert.

### Versuch 3 ergleichs- : Gleichzeitige Zugabe der Lewis-Base C)

Es wurde analog Versuch 1 gearbeitet, jedoch wurde die Lewis-Base C) zuvor in der Katalysatorlösung gelöst.

### Versuch 4: Zugabe der Aryloxyaluminiumverbindung

Es wurde analog Versuch 1 ergleichs-gearbeitet, jedoch wurde eine Lösung von 2,2 g (100 mmol) 2,6-Di-tert.-butyl-4-methylphenol und 9,96 g (50 mmol) Triisobutylaluminium in 50 ml Toluol anstatt der reinen Phenolkomponente zugegeben.

### Versuche 7 ergleichs- bis 13 ergleichs- und 15 ergleichs-: Polymerisationen von Ethylen, Propen und 1-Decen ohne Überdruck

In einem 1 l Dreihalskolben wurden 500 ml Pentan vorgelegt und bei 40 °C eine Mischung aus Metallocenkomponente A) in 32 ml 1,7 M toluolischer Methylaluminoxanlösung zugegeben. Danach wurde das gasförmige Monomere in die Pentanmischung eingeleitet. Im Falle des flüssigen 1-Decen als Monomeres wurde dieses vor der Zugabe der Metallocen/Methylaluminoxanmischung in Pentan vorgelegt. Zehn Minuten nach der Dosierung des Katalysators wurde die Lewis-Base C) zugegeben und die Polymerisation 5 h lang durchgeführt, das Polymere oder Oligomere isoliert und charakterisiert.

### Versuch 14: Polymerisation von Propylen mit kationischem Aktivator

In einen 1 1 Stahlautoklaven wurden 350 g Propylen einkondensiert und auf 50 °C erwärmt, wobei sich ein Druck von 2000 kPa einstellte. Man gab dann eine Lösung der Metallocenverbindung in 50 ml Toluol und eine Lösung von 0,99 g (5 mmol) Triisobutyl-aluminium in 50 ml Toluol zu und startete die Polymerisation durch Zugabe von 80 mg (0,1 mmol) Dimethylanilinium[tetrakis(pentafluorphenyl)borat], gelöst in 20 ml Toluol. Nach fünf Minuten gab man das Reaktionsprodukt aus 11 mg (0,5 mmol) 2,6-Di-tert.-butyl-4-methylphenol und 12,5 mg (0,25 mmol) Triisobutylaluminium, gelöst in 20 ml Ethylbenzol, zu. Die Polymerisation wurde solange durchgeführt, bis der Reaktordruck gerade unter 300 kPa gesunken war (30 min). Überschüssiges Propylen wurde entfernt und das Reaktionsprodukt isoliert und analysiert.

### Versuche 16 ergleichs-1 16 ergleichs-2 Polymerisation von Styrol

In einem Rundkolben wurden 104,1 g (1,0 mol) Styrol vorgelegt und bei 60 °C 12 ml (110 mmol) 10 %ige toluolische Methylaluminoxanlösung und 7,6 mg (0,033 mmol) Pentamethylcyclopentadienyltitantrimethyl zugegeben. Danach wurde die Additivkomponente C) zugegeben und die Polymerisation 3 min lang durchgeführt, das Polymere mit 60 ml Methanol gefällt, isoliert und charakterisiert.

Die Parameter und Ergebnisse der Olefin- bzw. der Styrolpolymerisationen sind in Tabelle 1 zusammengefasst. Ein V nach der Versuchsnummer bezeichnet einen Vergleichsversuch zu dem direkt vorangegangenen Versuch ohne Zusatz der Komponente C) bzw. mit 2,6-Di tert.-butyl-4-methylphenyl as Komponente C).

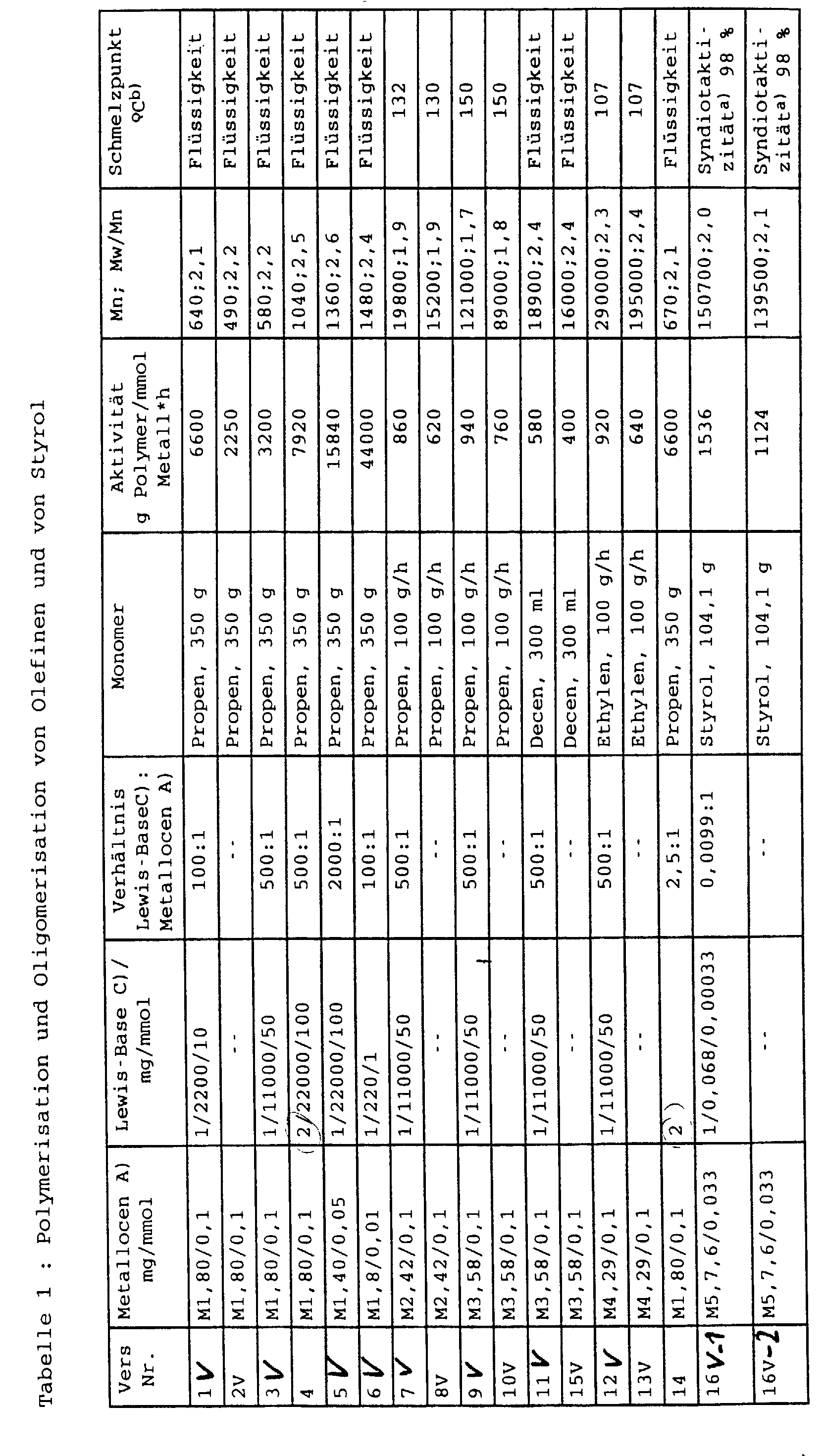

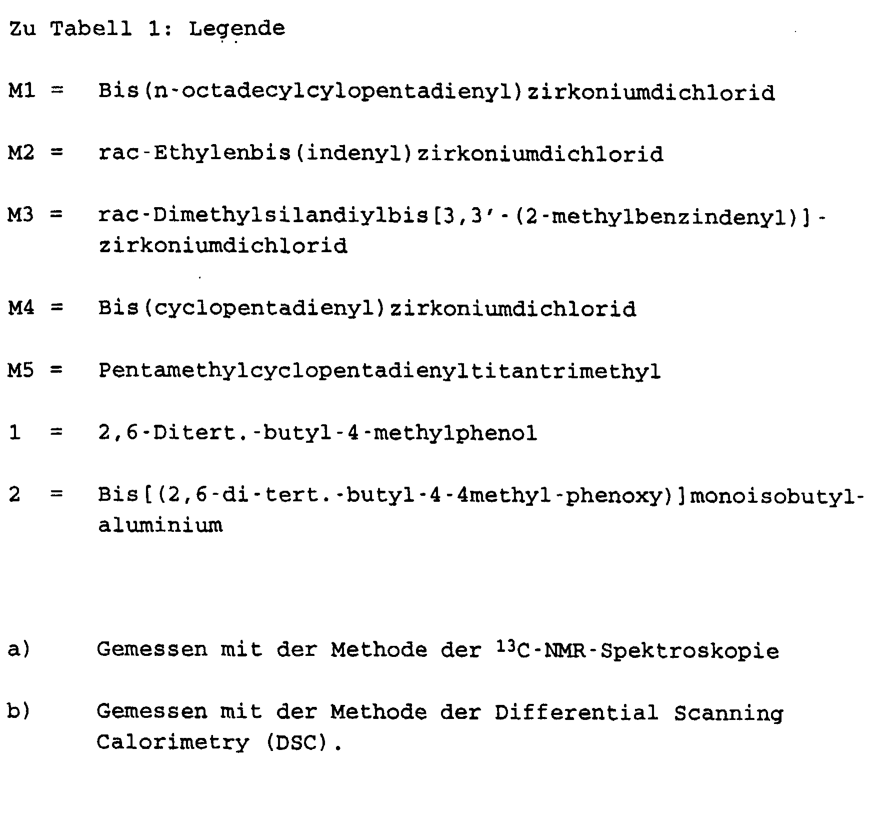

## Patentansprüche

1. Katalysatorsysteme, die für die Polymerisation von olefinisch ungesättigten Verbindungen geeignet sind, enthaltend als aktive Bestandteile
A) einen Metallocenkomplex der Metalle der vierten, fünften oder sechsten Nebengruppe des Periodensystems der Elemente,
B) eine metalloceniumionenbildende Verbindung und
C) eine sterisch gehinderte Aryloxyaluminiumverbindung.

2. Katalysatorsysteme nach Anspruch 1, wobei die Komponente B) ein C₁- bis C₁₀-Aluminoxan ist.

3. Katalysatorsysteme nach Anspruch 1, wobei die sterisch gehinderte Aryloxyaluminiumverbindung C) ein Phenolderivat oder, Naphtholderivat ist, in welchem die, der Aluminiumoxygruppe direkt benachbarten, substituierbaren Ringpositionen sperrige Reste tragen.

4. Verfahren zur Herstellung von Polymeren durch Verknüpfung von mindestens zwei olefinisch ungesättigten Monomeren bei einer Temperatur im Bereich von 0 bis 450 °C und einem Druck im Bereich von 0,1 bis 500000 kPa in Gegenwart eines Katalysatorsystems, dadurch gekennzeichnet, daß man als Katalysatorsystem ein solches verwendet, welches als aktive Bestandteile
A) einen Metallocenkomplex der Metalle der vierten, fünften oder sechsten Nebengruppe des Periodensystems der Elemente,
B) eine metalloceniumionenbildende Verbindung und
C) eine sterisch gehinderte Aryloxyaluminiumverbindung enthält.

5. Verfahren nach Anspruch 4, wobei die Komponente B) ein C₁-bis C₁₀-Aluminoxan ist.

6. Verfahren nach den Ansprüchen 4 oder 5, wobei die sterisch gehinderte Aryloxyaluminiumverbindung C) ein Phenolderivat oder Naphtholderivat ist, in welchem die, der Aluminiumoxygruppe direkt benachbarten, substituierbaren Ringpositionen sperrige Reste tragen.

## Claims

1. A catalyst system suitable for the polymerization of olefinically unsaturated compounds, which comprises as active constituents
A) a metallocene complex of the metals of the fourth, fifth or sixth transition group of the Periodic Table of the Elements,
B) a compound forming metallocenium ions and
C) a sterically hindered aryloxyaluminum compound.

2. A catalyst system as claimed in claim 1, wherein the component B) is a C₁-C₁₀-aluminoxane.

3. A catalyst system as claimed in claim 1, wherein the sterically hindered aryloxyaluminum compound C) is a phenol derivative or naphthol derivative, in which the substitutable ring positions directly adjacent to the aluminoxy group bear bulky radicals.

4. A process for preparing polymers by linking at least two olefinically unsaturated monomers at from 0 to 450°C and a pressure in the range from 0.1 to 500,000 kPa in the presence of a catalyst system, wherein the catalyst system used comprises as active constituents
A) a metallocene complex of the metals of the fourth, fifth or sixth transition group of the Periodic Table of the Elements,
B) a compound forming metallocenium ions and
C) a sterically hindered aryloxyaluminum compound.

5. A process as claimed in claim 4, wherein the component B) is a C₁-C₁₀-aluminoxane.

6. A process as claimed in claim 4 or 5, wherein the sterically hindered aryloxyaluminum compound C) is a phenol derivative or naphthol derivative, in which the substitutuable ring positions directly adjacent to the aluminoxy group bear bulky radicals.

## Revendications

1. Systèmes catalytiques, qui conviennent pour la polymérisation de composés oléfiniquement insaturés, contenant comme composants actifs
A) un complexe de type métallocène des métaux du quatrième, cinquième ou sixième groupe secondaire du système périodique des éléments,
B) un composé générateur d'ions métallocénium, et
C) un composé aryloxy-aluminium stériquement empêché.

2. Systèmes catalytiques suivant la revendication 1, dans lesquels le composant B) est un aluminoxane en C₁ à C₁₀.

3. Systèmes catalytiques suivant la revendication 1, dans lesquels le composé aryloxy-aluminium stériquement empêché C) est un dérivé de phénol ou un dérivé de naphtol, dans lequel les positions de noyau substituables, directement voisines du groupe aluminiumoxy, portent des radicaux encombrés.

4. Procédé de préparation de polymères par liaison d'au moins deux monomères oléfiniquement insaturés à une température de l'ordre de 0 à 450°C et à une pression de l'ordre de 0,1 à 500000 kPa, en présence d'un système catalytique, caractérisé en ce que, comme système catalytique, on utilise un système qui contient, comme composants actifs,
A) un complexe de type métallocène des métaux du quatrième, du cinquième ou du sixième groupe secondaire du système périodique des éléments,
B) un composé générateur d'ions métallocénium, et
C) un composé aryloxy-aluminium stériquement empêché.

5. Procédé suivant la revendication 4, dans lequel le composant B) est un aluminoxane en C₁ à C₁₀.

6. Procédé suivant l'une des revendications 4 et 5, dans lequel le composé aryloxy-aluminium stériquement empêché C) est un dérivé de phénol ou un dérivé de naphtol dans lequel les positions de noyau substituables, directement voisines du groupe aluminiumoxy, portent des radicaux encombrés.
